# EUROPEAN PATENT SPECIFICATION

(11) **EP 3 778 267 B1**
(45) Date of publication and mention of the grant of the patent: **22.03.2023**
(21) Application number: 20187650.5
(22) Date of filing: 24.07.2020
(51) Int. Cl.: B60C 19/00, B29D 30/00, B60C 5/00

(54) **PNEUMATIC TYRE AND METHOD FOR THE CONSTRUCTION OF SAID PNEUMATIC TYRE**
LUFTREIFEN UND VERFAHREN ZUR HERSTELLUNG DIESES LUFTREIFENS
PNEUMATIQUE ET PROCÉDÉ DE CONSTRUCTION DUDIT PNEUMATIQUE

(30) Priority: 13.08.2019 IT 201900014712
(43) Date of publication of application: 17.02.2021
(73) Proprietor: Bridgestone Europe NV/SA, 1932 Zaventem (BE)
(72) Inventor: Arends, Robin, 00128 Roma (IT); Camosi, Luca, 00128 Roma (IT)
(74) Representative: Marchetti, Alessio

(56) References cited:
- WO-A1-2007/051232
- JP-A- 2012 126 233
- US-A1- 2012 291 933

## Description

### TECHNICAL FIELD

The invention relates to a pneumatic tyre and to a method for the construction of a pneumatic tyre.

### PRIOR ART

As it is known, a pneumatic tyre comprises a toroidal carcass which consists of one single body ply and an annular tread and defines internally a toroidal cavity. On the inside of the body ply there is applied an inner-liner, which has the function of keeping the air on the inside the tyre in order to preserve the inflation pressure of the tyre over time.

During the rolling on a road surface, the tyre is subjected to a crushing, which excites the air contained inside said toroidal cavity. This phenomenon produces vibrations, which are transmitted and amplified through the rim and the axle shaft up to the body of the vehicle.

More in detail, the column of air imprisoned in the toroidal cavity has its own natural modes. Its first natural mode, called cavity mode, lies between 180 and 250 Hz for a typical passenger car tyre, depending on the size of the envelope. When the column of air starts resonating, it creates acoustic pressure on the wheel which can cause it to vibrate. The wheel then transmits its vibrations to the wheel centre, then to the passenger cabin through structure-borne propagation. The noise generated by said structure-borne propagation turns out to be particularly irritating for the people sitting in the passenger compartment.

As a consequence, technical solutions must be found to reduce this type of noise. The use of a porous material applied to the inner-liner, in a manner such that the resonance cavity noise is reduced by the porous material, has long been known. The porous material works by reducing the available section for the pressure waves to propagate and contributes by dissipating the pressure waves.

Hence, tyre manufacturers have suggested providing the tyre with sound-absorbing foam inserts arranged in the area of the crown, i.e. the central portion of the tread, on the inner-liner.

This solution has been proven to produce a significant reduction in the noise generated by the rolling of the tyre however, the tyres provided with sound-absorbing inserts are characterized by some drawbacks.

In particular, in case a vehicle is provided with a tyre mobility kit (TMK) made of a liquid sealing agent that is introduced in the tyre once deflated to seal holes, the presence of a sound-absorbing foam insert makes it difficult for the liquid to carry out its sealing action as it is absorbed by the foam that generally constitutes the mentioned insert.

Additionally, the sound-absorbing foam inserts keep thermal energy generated during driving. This thermal isolation of the sound-absorbing foam inserts have a negative impact on the durability of the tyre due to the temperature increase, especially in the crown area.

Patent application JP2012126233A discloses a pneumatic tire in which a sound absorbing material made of nonwoven fabric can be easily and firmly fixed to an inner face of the tire by means of a hook-and-loop fastener.

Patent application US2012291933A1 discloses a pneumatic tire including a resin layer on at least a portion of the tire inside surface, the resin layer being formed from a thermoplastic resin or a thermoplastic elastomer composition in which an elastomer is dispersed in a thermoplastic resin; the pneumatic tire is provided with a fastener including a base material formed from a thermoplastic resin and engaging elements formed on the base material.

Patent application WO2007051232A1 discloses an in-tyre sound absorber.

### DESCRIPTION OF THE INVENTION

An object of the invention is therefore to provide a pneumatic tyre, which is not affected by the drawbacks of the prior art.

A further object of the invention is to provide a method for the construction of a pneumatic tyre, which is not affected the drawbacks of the prior art.

According to the invention, there are provided a pneumatic tyre and a method for the construction of said pneumatic tyre according to the appended claims.

### BRIEF DESCRIPTION OF THE DRAWINGS

The invention will now be described with reference to the accompanying drawings, showing a non-limiting embodiment thereof, wherein:
- figure 1 is a schematic cross section, with parts removed for greater clarity, of a first variant of a pneumatic tyre according to the invention;
- figure 2 is a schematic cross section, with parts removed for greater clarity, of a second variant of a pneumatic tyre according to the invention;
- figure 3 is a section view of an assembly formed by a spacer layer and an insert of the pneumatic tyre of figure 1; and
- figure 4 shows, on a larger scale, a detail of figure 3.

### PREFERRED EMBODIMENTS OF THE INVENTION

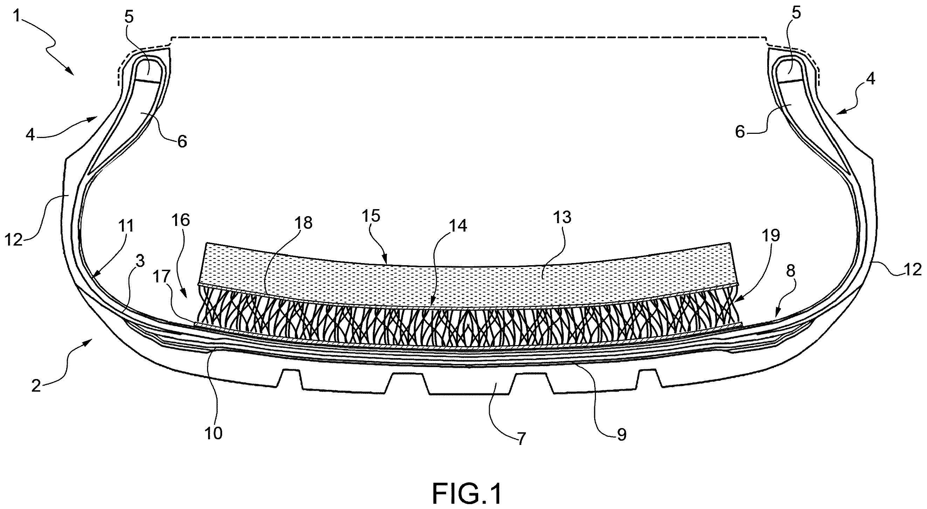

In figure 1, number 1 indicates, as a whole, a pneumatic tyre comprising a toroidal carcass 2, which consists of one single body ply 3.

On both edges of the carcass 2, there are two annular beads 4, each having a bead core 5, which is reinforced with a number of loops of a metal wire and a bead filler 6. The body ply 3 extends up to the bead cores 5; according to a variant, the body ply 3 is partially folded onto itself (thus, laterally having two layers overlapping one another) so as to surround the two bead cores 5.

The carcass 2 supports an annular tread 7; between the carcass 2 and the tread 7, a tread belt 8 is interposed, which comprises two tread plies 9. Each tread ply 9 comprises a number of cords (not shown), which are embedded within a rubber belt, are arranged alongside one another with a given pitch and form an angle of inclination determined in relation to an equatorial plane of the tyre 1.

On the tread belt 8 (and, hence, between the tread belt 8 and the tread 7) there is a reinforcing layer 10, which is commonly referred to as "cap ply" and consists of a continuous raw rubber strip, which is internally reinforced with strands of nylon or the like and is longitudinally wrapped on the tread belt 8 so as to fulfil the function of protecting and containing the tread plies 9.

According to an embodiment, between the body ply 3 and the outer ends of the tread belt 8, there are interposed two tread ply inserts (not shown), which have the function of a cushion.

On the inside of the body ply 3 (preferably applied on the entire available surface) there is applied an inner-liner 11, which is impermeable to air, constitutes an inner coating and has the function of keeping the air on the inside the tyre 1 in order to preserve the inflation pressure of the tyre 1 over time.

The body ply 3 supports a pair of sidewalls 12 arranged on the outside of the body ply 3, arranged under the tread 7 and extending up to the beads 4.

According to a first variant, the sidewalls 12 are partially and externally clad with mini sidewalls (not shown) which are typically arranged at the same level as the tread 7 and, therefore, in a contact zone, are arranged side by side with the tread 7 itself. Finally, according to a further variant, the body ply 3 also supports a pair of abrasion gum strips (not shown) arranged on the outside under the sidewalls 12 and in the area of the beads 4.

The tyre 1 comprises at least one sound-absorbing insert 13, which is arranged in the area of the crown, i.e. the central portion of the tyre 1. The insert 13 is arranged on the inside of the body ply 3 (in other words, it is arranged on the opposite side of the body ply 3 relative to the sidewalls 12), in correspondence with a central area of the tread 7.

The insert 13 is provided with a respective, substantially flat inner surface 14, which faces towards the outside of the tyre 1, i.e. towards the body ply 3.

Furthermore, each insert 13 is provided with a respective outer surface 15 facing the inside of the tyre 1, which is substantially flat and parallel to the inner surface 14.

The insert 13 is made of a sound-absorbing material. In particular, the insert 13 is made of a polymer matrix foam.

The polymer matrix foam preferably is of the type of open or semi-open cells. According to a first variant, the polymer matrix foam is a rubber-based foam. According to a further variant, the polymer matrix foam is a polyurethane foam. The density of the sound-absorbing material ranges from 15 kg/m³ to 120 kg/m³. The density of the sound-absorbing material preferably ranges from 20 kg/m³ to 50 kg/m³.

The insert 13 has a thickness (i.e. a distance between the inner surface 14 and the outer surface 15) ranging from 10 to 40 mm. The thickness of the insert 13 preferably ranges from 15 to 35 mm.

According to a first embodiment, the insert 13 has an annular shape. In other words, the insert 13 extends over an area covering 365° of the inner surface of the cavity defined by the tyre 1 (relative to an equatorial plane of the tyre 1) .

According to a second embodiment, the insert 13 extends over an area covering between 290° and 360° of the inner surface of the cavity defined by the tyre 1; preferably, between 300° and 355° of the inner surface of the cavity defined by the tyre 1. In other words, there is a discontinuity in the application of the insert 13 with a variable width ranging from 75° to 5° of the inner surface of the cavity defined by the tyre 1; preferably, between 65° and 10° of the inner surface of the cavity defined by the tyre 1.

According to a further variant (not shown), the insert 13 is realized by a number of separated partial-insert placed one next to the other in tyre 1 circumferential direction or in tyre 1 width direction.

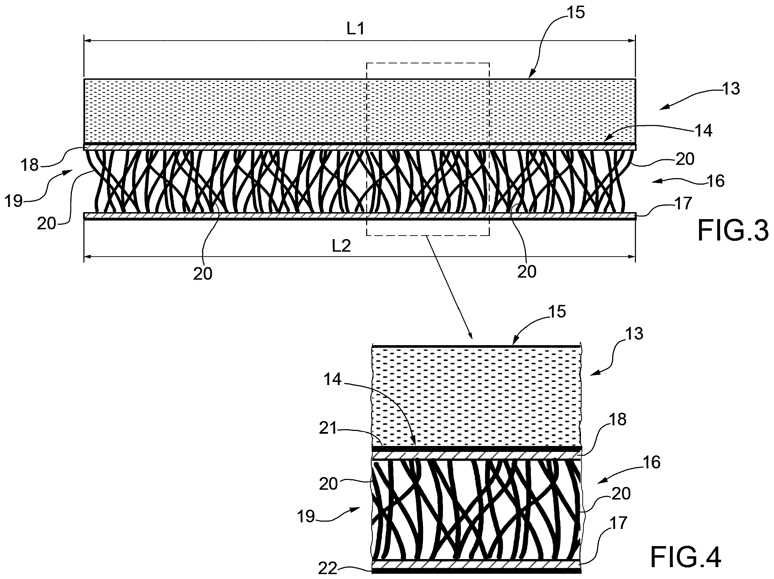

Finally, the tyre 1 comprises at least one spacer layer 16 interposed between the insert 13 and the tread 7 and disclosed in detail in figure 3. The spacer layer 16 is arranged in the area of the crown, i.e. the central portion of the tyre 1. The spacer layer 16 is arranged on the inside of the body ply 3 (in other words, it is arranged on the opposite side of the body ply 3 relative to the sidewalls 12), in correspondence with a central area of the tread 7. The spacer layer 16 is connected to inner most layer.

The inner most layer is the layer which is exposed to the tyre inner cavity. The inner most layer is alternatively the body ply 3 or the inner-liner 11.

According to a preferred variant, the spacer layer 16 is externally connected to the inner-liner 11 (namely, the spacer layer 16 is directly connected to the inner-liner 11 on the opposite side of the inner-liner 11 relative to the body ply 3).

The spacer layer 16 is made of a three-dimensional (3D) fabric. The spacer layer 16 is preferably made of a three-dimensional fabric with synthetic fibres, such as, for example, polyester or viscose or polyamide. The stiffness of said three-dimensional fabric is greater than or equal to 15 kPa so that it can avoid the compression, and can keep the necessary distance between the tyre 1 surface and the insert 13 even in during the high speed driving.

The spacer layer 16 is provided with a respective inner wall 17, which faces towards the outside of the tyre 1 and is fixed to the body ply 3. Furthermore, the spacer layer 16 is provided with a respective outer wall 18 facing towards the inside of the tyre 1, substantially parallel to the inner wall 14, fixed to the insert 13 and arranged at a given distance - other than zero - from the inner wall 17.

Furthermore, the spacer layer 16 is provided with an intermediate layer 19, which connects said two inner and outer walls 17 and 18 to one another and comprises a plurality of connection elements 20. Each connection element 20 extends between said two inner and outer walls 17 and 18 and is transverse to said two inner and outer walls 17 and 18.

The intermediate layer 19 is defined by a layer of monofilament fibres or strands so as to space apart said two inner and outer walls 17 and 18. The intermediate layer 19 is manufactured so as to allow an air flow to flow between the connection elements 20.

The density of the three-dimensional fabric ranges from 40 kg/m³ to 65 kg/m³. The intermediate layer 19 has a density ranging from 10% to 45% of a density of said inner and outer walls 17 and 18.

The spacer layer 16 has a thickness (i.e. a distance between the inner wall 17 and the outer wall 18) ranging from 6 to 40 mm. The thickness of the spacer layer 16 preferably ranges from 9 to 25 mm. Each one of said two inner and outer walls 17 and 18 has a thickness ranging from 5% to 20% of the total thickness S of the spacer layer 16 and the intermediate layer 19 has a thickness ranging from 60% to 90% of the total thickness S of the spacer layer 16.

According to a first embodiment, the spacer layer 16 has an annular shape. In other words, the spacer layer 16 extends over an area covering 365° of the inner surface of the cavity defined by the tyre 1 (relative to an equatorial plane of the tyre 1). According to a second embodiment, the spacer layer 16 extends over an area covering between 290° and 360° of the inner surface of the cavity defined by the tyre 1; preferably, between 300° and 355° of the inner surface of the cavity defined by the tyre 1. In other words, there is a discontinuity in the application of the spacer layer 16 with a variable width ranging from 75° to 5° of the inner surface of the cavity defined by the tyre 1; preferably, between 65° and 10° of the inner surface of the cavity defined by the tyre 1. The discontinuity in the spacer layer 16 preferably coincides with the discontinuity in the insert 13.

According to a further variant (not shown), the spacer layer 16 is realized by a number of separated partial-spacer layer placed one next to the other in tyre 1 circumferential direction or in tyre 1 width direction.

Furthermore, according to a preferred variant, the width L₁ of the spacer layer 16 substantially coincides with a width L₂ of the insert 13.

According to what disclosed in figure 4, the spacer layer 16 is advantageously connected to the insert 13 by means of an adhesive layer 21. The spacer layer 16 and the insert 13 are preferably connected to one another by any types of adhesives, for example solid or liquid types of acrylic, polyurethane, silicone or butyl based glue.

The spacer layer 16 is preferably connected to the tyre 1 by means of an adhesive layer 22. The spacer layer 16 and the tyre 1 are preferably connected to one another by any types of adhesives, for example solid or liquid types of acrylic, polyurethane, silicone or butyl based glue.

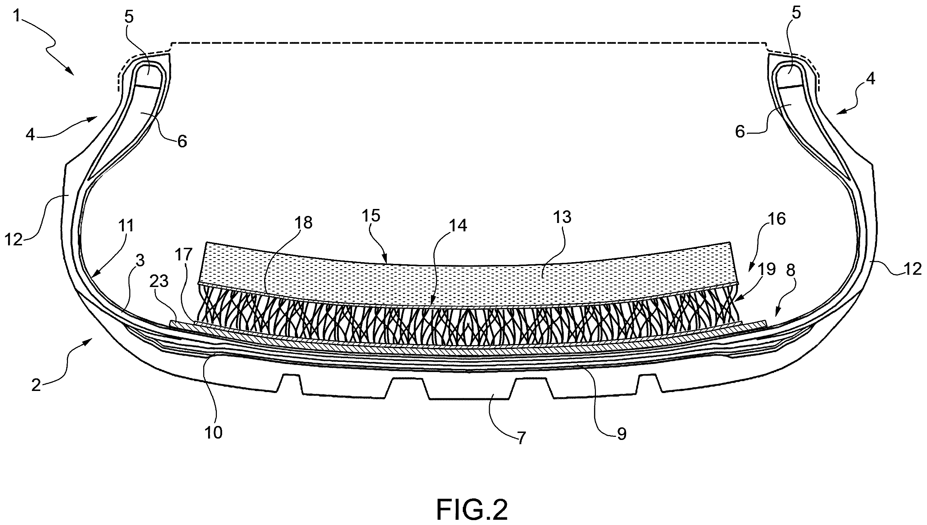

According to the embodiment shown in figure 2, the tyre is provided with an inner coating 23 made of a sealing agent used to seal possible holes and having a high viscosity in order to ensure both the sealing action when there are holes and the stability thereof in the inner cavity regardless of the conditions of the tyre.

The inner coating 23 is preferably applied on the inner-liner 11 in the area of the tyre coming into contact with the road surface (namely, the area of the tyre where there can potentially be holes). In particular, the sealing agent is applied in the area of the tread 7 and, at least partially, in the area of the sidewalls 12. In this case, the inner wall 17 is going to create the coupling with the inner coating 23.

Hereinafter there is a description of the method for the construction of a tyre 1 provided with the spacer layer 16 of the type described above.

The method comprises, first of all, incorporating the bead cores 5 and the bead fillers 6 in the body ply 3. The body ply 3 is then wrapped around a forming drum (not shown), so as to cause the body ply 3 to gain an annular shape, overlapping the two opposite ends of the body ply 3.

Subsequently, the inner-liner 11, which has the function of making the tyre 1 impermeable, is applied on the inner surface of the body ply 3 (namely, on the opposite surface relative to possible tread ply inserts). Finally, the green tyre 1 is completed by coupling the body ply 3 to the other components, such as the sidewalls 12 and the tread 7. After having completed the assembly of the green tyre 1, the latter is subjected to a vulcanization process in suitable moulds so as to obtain a semi-finished tyre 1.

The semi-finished tyre 1, in order to complete the manufacturing process, is subjected to a further processing, in which the assembly consisting of the spacer layer 16 and the insert 13 is fixed to the inner-liner 11 through the adhesive layer 22.

Both the spacer layer 16 and the insert 13 are produced during a processing step that is independent of the forming process of the semi-finished tyre 1 and, subsequently, are coupled thereto by means of the adhesive layer 21.

According to a first variant, the inner wall 17 is connected to the inner-liner 11 by means of a hot coupling.

In other words, the spacer layer 16 is connected to the inner-liner 11 before the hardening of the semi-finished tyre 1 is complete. According to a preferred variant, the hot coupling between the spacer layer 16 and the inner-liner 11 is carried out through the application of a layer or stripes of adhesive material.

According to a further variant, the inner wall 17 is connected to the inner-liner 11 by means of a cold coupling.

In other words, the spacer layer 16 is connected to the inner-liner 11 once the hardening of the semi-finished tyre 1 is complete. According to a preferred variant, the cold coupling between the spacer layer 16 and the inner-liner 11 is carried out through the application of a layer or stripes of adhesive material.

On the other hand, in case there is an inner coating 23, the method comprises, first of all, incorporating the bead cores 5 and the bead fillers 6 in the body ply 3. The body ply 3 is then wrapped around a forming drum (not shown), so as to cause the body ply 3 to gain an annular shape, overlapping the two opposite ends of the body ply 3.

Subsequently, the inner-liner 11, which has the function of making the tyre 1 impermeable, is applied on the inner surface of the body ply 3 (namely, on the opposite surface relative to possible tread ply inserts). Finally, the green tyre 1 is completed by coupling the body ply 3 to the other components, such as the sidewalls 12 and the tread 7. After having completed the assembly of the green tyre 1, the latter is subjected to a vulcanization process in suitable moulds so as to obtain a semi-finished tyre 1.

The semi-finished tyre 1, in order to complete the manufacturing process, is subjected to further processing steps, during which, at first, the inner coating 23 is applied and, subsequently, the assembly consisting of the spacer layer 16 and the insert 13 is fixed to the inner coating 23.

Both the spacer layer 16 and the insert 13 are produced during a processing step that is independent of the forming process of the semi-finished tyre 1 and, subsequently, are coupled thereto by means of the adhesive layer 21.

Experiments have shown that, in case a vehicle is provided with a tyre mobility kit (TMK) made of a liquid sealing agent that is introduced in the tyre once deflated to seal holes, in a tyre provided with both the insert 13 and the spacer layer 16, normally 300 ml of liquid sealing agent are needed to repair holes. In a tyre provided exclusively with the insert 13, experiments have shown instead that normally 1100 ml of liquid sealing agent are needed to repair holes because the sealing agent is absorbed by the foam of the insert 13.

Thanks to the special combination of features of the present invention combining a very high stiffness with a low density in the separation layer (spacer layer 16) between the tire surface and the noise absorbing foam (sound-absorbing insert 13), it is possible to achieve a synergistic effect and thus it is possible to obtain a tire 1 having, at the same time, a good durability (by avoiding temperature increase especially in the crown area) and an effective action of a tyre mobility kit (TMK) made of a liquid sealing agent. In other words, by using a separation layer (spacer layer 16) having a very high stiffness and, at the same time, a low density, it is possible to have a good flow of fluids (air and also liquid sealing agent) below the noise absorbing foam (sound-absorbing insert 13) and such good flow of fluids allows a good cooling (i.e. avoids temperature increase and thus guarantees good durability) and also allows an effective action of a tyre mobility kit (TMK) made of a liquid sealing agent.

Another special feature of the present invention is the good mechanical connection between the separation layer (spacer layer 16) and the flat inner surface 14 / inner wall 17 creating a very strong bounding despite the minimum density and contact surface of the separation layer (spacer layer 16), guaranteeing the adhesion to both tire 1 and noise absorbing foam (sound-absorbing insert 13).

## Claims

1. A pneumatic tyre (1) comprising:
a toroidal carcass (2) consisting of at least one body ply (3);
two annular beads (4), which are arranged on both edges of the carcass (2) and preferably are at least partially surrounded by the body ply (3);
an annular tread (7), which is supported by the carcass (2) ;
at least one insert (13), which is arranged on the inside of the body ply (3) and in correspondence with a central area of the tread (7) and is made of a sound-absorbing material, preferably a polymer matrix foam; and
a spacer layer (16) interposed between the insert (13) and an inner most layer (3; 11) of the tyre (1) and arranged in correspondence with a central area of the tread (7);
wherein the spacer layer (16) comprising a three-dimensional fabric with fibres and is provided with a first wall (17), which is fixed to the inner most layer (3; 11) of the tyre (1); with a second wall (18), which is radially arranged more on the inside of the tyre (1) than the first wall (17), is fixed to the insert (13) and is at a given distance - other than zero - from the first wall (17); and with an intermediate layer (19), which connects said two walls (17, 18) to one another and comprises a plurality of connection elements (20), each extending between said two walls (17, 18) and being transverse to the said two walls (17, 18);
the tyre (1) is **characterized in that:**
each connection element (20) consists of monofilament fibres;
the stiffness of said three-dimensional fabric is greater than or equal to 15 kPa;
the intermediate layer (19) has a density ranging from 10% to 45% of a density of said walls (17, 18) and ranging from 40 kg/m³ to 65 kg/m³; and
each wall (17, 18) has a thickness ranging from 5% to 20% of a total thickness of the spacer layer (16) and the intermediate layer (19) has a thickness ranging from 60% to 90% of the total thickness of the spacer layer (16).

2. A pneumatic tyre according to claim 1, wherein the spacer layer (16) has a total thickness ranging from 6 to 40 mm and preferably ranges from 9 to 25 mm.

3. A pneumatic tyre according to claim 1 or 2, wherein the spacer layer (16) is connected to the insert (13) by means of an adhesive layer (21), preferably a uniform layer of acrylic glue.

4. A pneumatic tyre according to claim 1, 2 or 3, wherein the spacer layer (16) is connected to the body ply (3) by means of an adhesive layer (22), preferably a uniform layer of acrylic glue.

5. A pneumatic tyre according to any one of the preceding claims, wherein the density of the sound-absorbing material ranged from 15 kg/m³ to 120 kg/m³, preferably from 20 kg/m³ to 50 kg/m³.

6. A pneumatic tyre according to any one of the preceding claims, wherein the thickness of the insert (13) ranges from 10 to 40 mm, preferably from 20 to 35 mm.

7. A pneumatic tyre according to any one of the preceding claims, wherein the polymer matrix foam is a polyurethane foam or a rubber foam.

8. A pneumatic tyre according to any one of the preceding claims and comprising an inner coating (23) made of a sealing agent and applied in the area of the tread (7) and, at least partially, in the area of a pair of sidewalls (12) supported by the body ply (3); wherein the first wall (17) is connected to the inner coating (23).

9. A method for the construction of a pneumatic tyre (1) according to any one of the claims from 1 to 8, said method comprising the following steps:
wrapping the body ply (3) around a forming drum overlapping the ends thereof, so as to give the body ply (3) an annular shape and in order to obtain a green tyre;
vulcanizing the green tyre (1) inside a mould so as to obtain a semi-finished tyre (1);
producing the insert (13) independently of and separately from the semi-finished tyre (1);
producing the spacer layer (16) independently of and separately from the semi-finished tyre (1);
connecting the insert (13) to the spacer layer (16); and
connecting the first wall (17) of the spacer layer (16) to the body ply (3) so as to obtain a finished tyre (1).

10. A method according to claim 9 wherein the first wall (17) of the spacer layer (16) is hot-coupled to the body ply (3) or to the inner-liner (11) through the application of a layer or stripes of adhesive material.

11. A method according to claim 9 or 10 and comprising the further steps of:
applying an inner coating (23) made of a sealing agent on the body ply (3) or on the inner-liner (11) after the vulcanization step; and
connecting the first wall (17) to the inner coating (23) so as to obtain a finished tyre (1).

12. A method according to claim 9, 10 or 11, wherein the first wall (17) of the spacer layer (16) is cold-coupled to the body ply (3) through the application of a layer or stripes of an adhesive substance.

## Patentansprüche

1. Luftreifen (1), umfassend:
eine torusförmige Karkasse (2), bestehend aus mindestens einer Karkassenlage (3);
zwei ringförmige Wülste (4), die an beiden Rändern der Karkasse (2) angeordnet sind und vorzugsweise zumindest teilweise von der Karkassenlage (3) umgeben sind;
eine ringförmige Lauffläche (7), die von der Karkasse (2) getragen wird;
mindestens einen Einsatz (13), der auf der Innenseite der Karkassenlage (3) und in Übereinstimmung mit einem zentralen Bereich der Lauffläche (7) angeordnet ist und aus einem schallabsorbierenden Material, vorzugsweise einem Polymermatrixschaum, hergestellt ist; und
eine Abstandhalterschicht (16), die zwischen dem Einsatz (13) und einer innersten Schicht (3; 11) des Reifens (1) und in Übereinstimmung mit einem zentralen Bereich der Lauffläche (7) angeordnet ist;
wobei die Abstandhalterschicht (16) ein dreidimensionales Gewebe mit Fasern umfasst und mit einer ersten Wand (17) versehen ist, die an der innersten Schicht (3; 11) des Reifens (1) befestigt ist; mit einer zweiten Wand (18), die radial mehr auf der Innenseite des Reifens (1) als die erste Wand (17) angeordnet ist, an dem Einsatz (13) befestigt ist und sich in einem bestimmten Abstand ungleich null von der ersten Wand (17) befindet; und mit einer Zwischenschicht (19), die die beiden Wände (17, 18) miteinander verbindet und eine Vielzahl von Verbindungselementen (20) umfasst, die sich jeweils zwischen den beiden Wänden (17, 18) erstrecken und quer zu den beiden Wänden (17, 18) verlaufen;
wobei der Reifen (1) **dadurch gekennzeichnet ist, dass:**
jedes Verbindungselement (20) aus Monofilamentfasern besteht;
die Steifigkeit des dreidimensionalen Gewebes größer als oder gleich 15 kPa beträgt;
die Zwischenschicht (19) eine Dichte im Bereich von 10 % bis 45 % einer Dichte der Wände (17, 18) und im Bereich von 40 kg/m³ bis 65 kg/m³ aufweist; und
jede Wand (17, 18) eine Dicke im Bereich von 5 % bis 20 % einer Gesamtdicke der Abstandhalterschicht (16) aufweist und die Zwischenschicht (19) eine Dicke im Bereich von 60 % bis 90 % der Gesamtdicke der Abstandhalterschicht (16) aufweist.

2. Luftreifen nach Anspruch 1, wobei die Abstandhalterschicht (16) eine Gesamtdicke im Bereich von 6 bis 40 mm und vorzugsweise im Bereich von 9 bis 25 mm aufweist.

3. Luftreifen nach Anspruch 1 oder 2, wobei die Abstandhalterschicht (16) mittels einer Klebstoffschicht (21), vorzugsweise einer einheitlichen Schicht aus Acrylkleber, mit dem Einsatz (13) verbunden ist.

4. Luftreifen nach Anspruch 1, 2 oder 3, wobei die Abstandhalterschicht (16) mittels einer Klebstoffschicht (22), vorzugsweise einer einheitlichen Schicht aus Acrylkleber, mit der Karkassenlage (3) verbunden ist.

5. Luftreifen nach einem der vorstehenden Ansprüche, wobei die Dichte des schallabsorbierenden Materials im Bereich von 15 kg/m³ bis 120 kg/m³, vorzugsweise von 20 kg/m³ bis 50 kg/m³, liegt.

6. Luftreifen nach einem der vorstehenden Ansprüche, wobei die Dicke des Einsatzes (13) von 10 bis 40 mm, vorzugsweise von 20 bis 35 mm, beträgt.

7. Luftreifen nach einem der vorstehenden Ansprüche, wobei der Polymermatrixschaum ein Polyurethanschaum oder ein Gummischaum ist.

8. Luftreifen nach einem der vorstehenden Ansprüche und umfassend eine innere Beschichtung (23), die aus einem Dichtmittel hergestellt ist und im Bereich der Lauffläche (7) und zumindest teilweise im Bereich eines Paares von Seitenwänden (12), die durch die Karkassenlage (3) getragen werden, aufgebracht ist; wobei die erste Wand (17) mit der inneren Beschichtung (23) verbunden ist.

9. Verfahren zum Aufbau eines Luftreifens (1) nach einem der Ansprüche 1 bis 8, wobei das Verfahren die folgenden Schritte umfasst:
Wickeln der Karkassenlage (3) um eine Formtrommel, die die Enden davon überlappt, um der Karkassenlage (3) eine ringförmige Form zu verleihen und um einen Reifenrohling zu erhalten;
Vulkanisieren des Reifenrohlings (1) innerhalb einer Form, um einen halbfertigen Reifen (1) zu erhalten;
Herstellen des Einsatzes (13) unabhängig von und getrennt von dem halbfertigen Reifen (1);
Herstellen der Abstandhalterschicht (16) unabhängig von und getrennt von dem halbfertigen Reifen (1);
Verbinden des Einsatzes (13) mit der Abstandhalterschicht (16); und
Verbinden der ersten Wand (17) der Abstandhalterschicht (16) mit der Karkassenlage (3), um einen fertigen Reifen (1) zu erhalten.

10. Verfahren nach Anspruch 9, wobei die erste Wand (17) der Abstandhalterschicht (16) durch Aufbringen einer Schicht oder von Streifen von Klebstoffmaterial mit der Karkassenlage (3) oder mit der Innenseele (11) heißgekoppelt ist.

11. Verfahren nach Anspruch 9 oder 10 und umfassend die weiteren Schritte:
Aufbringen einer inneren Beschichtung (23), die aus einem Dichtmittel hergestellt ist, auf die Karkassenlage (3) oder auf die Innenseele (11) nach dem Vulkanisierungsschritt; und
Verbinden der ersten Wand (17) mit der inneren Beschichtung (23), um einen fertigen Reifen (1) zu erhalten.

12. Verfahren nach Anspruch 9, 10 oder 11, wobei die erste Wand (17) der Abstandhalterschicht (16) durch das Aufbringen einer Schicht oder von Streifen einer Klebstoffsubstanz mit der Karkassenlage (3) kaltgekoppelt ist.

## Revendications

1. Bandage pneumatique (1) comprenant :
un corps toroïdal (2) constitué par au moins une nappe carcasse (3) ;
deux talons annulaires (4), qui sont agencés sur les deux bords du corps (2) et de préférence sont au moins partiellement entourés par la nappe carcasse (3) ;
une bande de roulement annulaire (7), qui est supportée par le corps (2) ;
au moins un insert (13), qui est agencé à l'intérieur de la nappe carcasse (3) et en correspondance avec une zone centrale de la bande de roulement (7) et est fait en un matériau insonorisant, de préférence une mousse de matrice polymère ; et
une couche d'écartement (16) interposée entre l'insert (13) et une couche la plus intérieure (3 ; 11) du bandage (1) et agencée en correspondance avec une zone centrale de la bande de roulement (7) ;
dans lequel la couche d'écartement (16) comprenant un tissu tridimensionnel avec des fibres et est pourvue d'une première paroi (17), qui est fixée à la couche la plus intérieure (3 ; 11) du bandage (1) ; avec une seconde paroi (18), qui est agencée radialement plus à l'intérieur du bandage (1) que la première paroi (17), est fixée à l'insert (13) et est à une distance donnée - autre que zéro - de la première paroi (17) ; et avec une couche intermédiaire (19), qui relie lesdites deux parois (17, 18) l'une à l'autre et comprend une pluralité d'éléments de liaison (20), chacun s'étendant entre lesdites deux parois (17, 18) et étant transversaux auxdites deux parois (17, 18) ;
le bandage (1) est **caractérisé en ce que :**
chaque élément de liaison (20) est constitué de fibres monofilamentaires ;
la raideur dudit tissu tridimensionnel est supérieure ou égale à 15 kPa ;
la couche intermédiaire (19) possède une masse volumique allant de 10 % à 45 % d'une masse volumique desdites parois (17, 18) et allant de 40 kg/m³ à 65 kg/m³ ; et
chaque paroi (17, 18) possède une épaisseur allant de 5 % à 20 % d'une épaisseur totale de la couche d'écartement (16) et la couche intermédiaire (19) possède une épaisseur allant de 60 % à 90 % de l'épaisseur totale de la couche d'écartement (16).

2. Bandage pneumatique selon la revendication 1, dans lequel la couche d'écartement (16) possède une épaisseur totale allant de 6 à 40 mm et va de préférence de 9 à 25 mm.

3. Bandage pneumatique selon la revendication 1 ou 2, dans lequel la couche d'écartement (16) est reliée à l'insert (13) au moyen d'une couche adhésive (21), de préférence une couche uniforme de colle acrylique.

4. Bandage pneumatique selon la revendication 1, 2 ou 3, dans lequel la couche d'écartement (16) est reliée à la nappe carcasse (3) au moyen d'une couche adhésive (22), de préférence une couche uniforme de colle acrylique.

5. Bandage pneumatique selon l'une quelconque des revendications précédentes, dans lequel la masse volumique du matériau insonorisant allait de 15 kg/m³ à 120 kg/m³, de préférence de 20 kg/m³ à 50 kg/m³.

6. Bandage pneumatique selon l'une quelconque des revendications précédentes, dans lequel l'épaisseur de l'insert (13) va de 10 à 40 mm, de préférence de 20 à 35 mm.

7. Bandage pneumatique selon l'une quelconque des revendications précédentes, dans lequel la mousse de matrice polymère est une mousse de polyuréthane ou une mousse de caoutchouc.

8. Bandage pneumatique selon l'une quelconque des revendications précédentes et comprenant une doublure interne (23) faite en un agent d'étanchéité et appliquée dans la zone de la bande de roulement (7) et, au moins partiellement, dans la zone d'une paire de parois latérales (12) supportées par la nappe carcasse (3) ; dans lequel la première paroi (17) est reliée à la doublure interne (23).

9. Procédé pour la construction d'un bandage pneumatique (1) selon l'une quelconque des revendications 1 à 8, ledit procédé comprenant les étapes suivantes :
l'enveloppement de la nappe carcasse (3) autour d'un tambour de formage chevauchant les extrémités de celle-ci, de manière à conférer à la nappe carcasse (3) une forme annulaire et afin d'obtenir un bandage vert ;
la vulcanisation du bandage vert (1) à l'intérieur d'un moule de manière à obtenir un bandage semi-fini (1) ;
la production de l'insert (13) indépendamment du et séparément du bandage semi-fini (1) ;
la production de la couche d'écartement (16) indépendamment du et séparément du bandage semi-fini (1) ;
la liaison de l'insert (13) à la couche d'écartement (16) ; et
la liaison de la première paroi (17) de la couche d'écartement (16) à la nappe carcasse (3) de manière à obtenir un bandage fini (1).

10. Procédé selon la revendication 9 dans lequel la première paroi (17) de la couche d'écartement (16) est couplée à chaud à la nappe carcasse (3) ou au revêtement interne (11) par l'intermédiaire de l'application d'une couche ou de rubans de matériau adhésif.

11. Procédé selon la revendication 9 ou 10 et comprenant, en outre, les étapes consistant en :
l'application d'une doublure interne (23) faite en un agent d'étanchéité sur la nappe carcasse (3) ou sur le revêtement interne (11) après l'étape de vulcanisation ; et
la liaison de la première paroi (17) à la doublure interne (23) de manière à obtenir un bandage fini (1).

12. Procédé selon la revendication 9, 10 ou 11, dans lequel la première paroi (17) de la couche d'écartement (16) est couplée à froid à la nappe carcasse (3) par l'intermédiaire de l'application d'une couche ou de rubans d'une substance adhésive.
